# EUROPEAN PATENT SPECIFICATION

(11) **EP 2 452 861 B1**
(45) Date of publication and mention of the grant of the patent: **05.06.2013**
(21) Application number: 11189069.5
(22) Date of filing: 15.11.2011
(51) Int. Cl.: B62D 1/16, B62D 25/08, B62D 25/14

(54) **Steering hanger beam structure**
Lenkungshängebalkenstruktur
Structure de faisceau de suspension de direction

(30) Priority: 15.11.2010 JP 2010254733
(43) Date of publication of application: 16.05.2012
(73) Proprietor: Honda Motor Co., Ltd., Tokyo 107-8556 (JP)
(72) Inventor: Kihara, Makoto, Saitama, 351-0193 (JP); Kameyama, Shigetaka, Saitama, 351-0193 (JP); Tezuka, Yutaro, Tochigi, 321-3325 (JP)
(74) Representative: Herzog, Markus

(56) References cited:
- EP-A2- 0 934 865
- FR-A1- 2 865 990
- US-A1- 2010 090 451

## Description

### BACKGROUND

The present invention relates to a structure of a steering hanger beam which supports a steering column.

A steering longer beam structure of the generic kind is known from FR-A-2 865 990. In the following further relevant prior art will be discussed.

Conventionally, a steering hanger beam for supporting a steering column is installed in the right-left direction of the vehicle inside of the instrument panel arranged in front of the driver's seat of the vehicle. For example, Unexamined Japanese Patent Application Publication No. 11-222157 discloses that the steering hanger beam, which is laterally installed at the front part of the cabin and is connected to a vehicle body at its opposite ends, is formed to be a dual pipe structure comprising an inner pipe and an outer pipe over the substantially full length in the longitudinal direction of the steering hanger beam.

The steering hanger beam structure disclosed in Unexamined Japanese Patent Application Publication No. 11-222157, however, has a problem that the weight of the steering hanger beam is significantly increased because the steering hanger beam is formed to be a dual pipe structure comprising an inner pipe and an outer pipe over the substantially full length in the longitudinal direction of the steering hanger beam. Further, a manufacturing process of the steering hanger beam having a dual pipe structure is complicated, and thus, a reinforcing structure has been desired which can more easily improve the rigidity of the steering hanger beam.

### SUMMARY

The present invention has been made in view of these problems and an object of the present invention is to provide a steering hanger beam structure which can suppress the weight increase of the steering hanger beam and can more easily improve the rigidity of the steering hanger beam than the conventional steering hanger beam.

A first aspect of the present invention provides a steering hanger beam structure according to claim 1 including: a steering hanger beam extending in a vehicle width direction and connected to right and left vehicle body members; a column holder arranged on an intermediate part of the steering hanger beam in the vehicle width direction and supporting a steering column; and a stiffener which is formed of a press plate, wherein the stiffener includes: a stiffener main body extending in a direction away from a cross sectional center of the steering hanger beam; a vehicle-body-member-side connecting end portion which is one end of the stiffener main body in the vehicle width direction and is connected to the vehicle body member; a column-holder-side connecting end portion which is the other end of the stiffener main body in the vehicle width direction and is connected to the column holder; and a beam connecting end portion which is an end portion of the stiffener main body on a side of the steering hanger beam and is welded to an outer circumferential surface of the steering hanger beam, wherein

the stiffener further comprises a first flange portion which extends from an end of the stiffener opposite to the beam connecting end portion in a direction in which the first flange portion intersects with the stiffener main body.

In the aforementioned steering hanger beam structure, it is preferable that the first flange portion is provided over an entire length of the stiffener in a vehicle width direction and includes a column-holder-side inclined portion at an end of the first flange portion opposite to the stiffener main body, the column-holder-side inclined portion being inclined away from the stiffener main body as the column-holder-side inclined portion comes closer to the column holder.

In the aforementioned steering hanger beam structure, it is preferable that the first flange portion is provided over an entire length of the stiffener in the vehicle width direction and includes a vehicle-body-member-side inclined portion at an end of the first flange portion opposite to the stiffener main body, the vehicle-body-member-side inclined portion being inclined away from the stiffener main body as the vehicle-body-member-side inclined portion comes closer to the column holder.

In the aforementioned steering hanger beam structure, it is preferable that the stiffener is welded to the outer circumferential surface of the steering hanger beam such that the stiffener main body extend in a vehicle front-rear direction; and the stiffener includes a first flange portion which is provided over an entire length of the stiffener in the vehicle width direction and extends downward from an end of the stiffener opposite to the beam connecting end portion, and wherein the first flange portion includes at its lower end a column-holder-side inclined portion which is inclined downward as the column-holder-side inclined portion comes closer to the column holder and a vehicle-body-member-side inclined portion which is inclined downward as the vehicle-body-member-side inclined portion comes closer to the vehicle body member.

In the aforementioned steering hanger beam structure, it is preferable that the column holder includes a recessed cross section part which extends in a vehicle front-rear direction and opens upward, and the stiffener further includes a leg portion which covers an opened portion of the recessed cross section part to form a closed cross section together with the recessed cross section part.

In the aforementioned steering hanger beam structure, it is preferable that the column holder includes a recessed cross section part which extends in a vehicle front-rear direction and opens upward, and the stiffener further includes a leg portion which covers an opened portion of the recessed cross section part to form a closed cross section together with the recessed cross section part, and wherein the leg portion is formed to be continued to the column-holder-side inclined portion.

In the aforementioned steering hanger beam structure, it is preferable that the stiffener includes a second flange portion which extends from the column-holder-side connecting end portion such that the second flange portion intersects with the stiffener main body, and the column-holder-side connecting end portion is connected to the column holder via the second flange portion.

In the aforementioned steering hanger beam structure, it is preferable that the stiffener includes a bead extending in the vehicle width direction, the bead being formed over the stiffener main body and the second flange portion.

### BRIEF DESCRIPTION OF THE DRAWINGS

Fig. 1 is a plain view of a steering hanger beam structure according to an embodiment of the present invention.
Fig. 2 is a perspective view showing a stiffener attached to the steering hanger beam seen downward from the left front side of the stiffener.
Fig. 3 is a cross sectional view along the line I-I shown in Fig. 2.
Fig. 4 is a cross sectional view along the line □-□ shown in Fig. 2.
Fig. 5 is a front view of the stiffener seen in the direction X shown in Fig. 2.

### DETAILED DESCRIPTION OF THE ILLUSTRATED EMBODIMENT

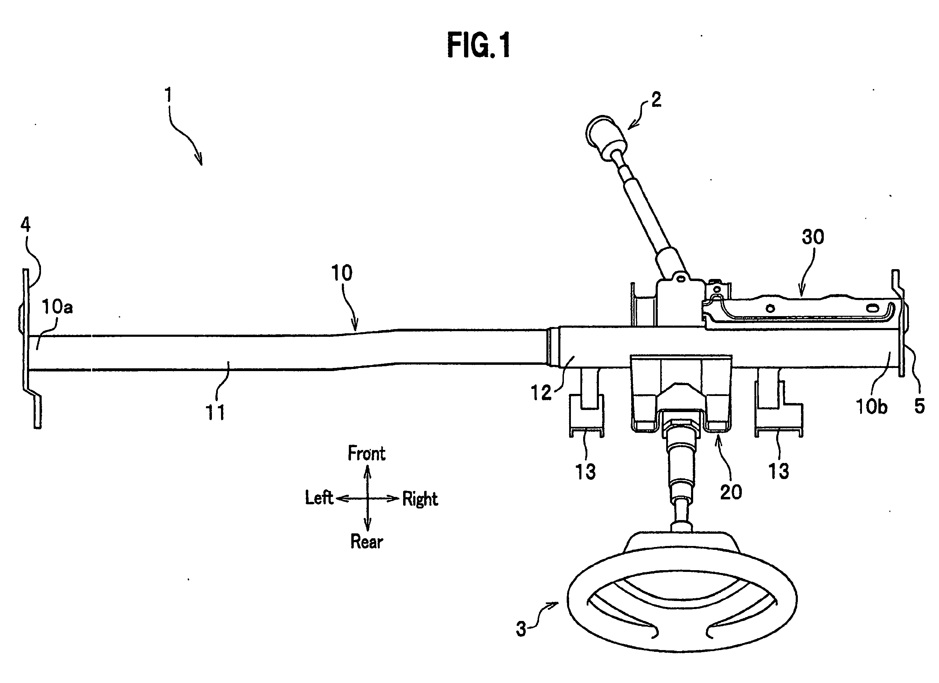

An embodiment of the present invention is described in detail with reference to Figs. 1 to 5. The embodiment is described by taking as an example a case where the present invention is applied to a right-handle vehicle. In the following description, similar components are assigned similar reference numerals, and repeated explanation thereof is omitted. When indicating a direction in the description, the direction is based on the front-rear, right-left and up-down directions of a vehicle. Accordingly, a "vehicle width direction" and a "right-left direction" mean the same direction in the following description.

A steering hanger beam structure 1 according to the embodiment is a device which supports a steering column 2 and a steering wheel 3 and is arranged in an instrument panel (not shown) provided at the front part of a cabin as shown in Fig. 1. The steering hanger beam structure 1 is mainly comprised of a steering hanger beam 10 which extends in the vehicle width direction, a column holder 20 which supports a steering column 2, and a stiffener 30 which is formed of a press plate.

As shown in Fig. 1, the steering hanger beam 10 is a pipe-like hollow member which is mounted across left and right vehicle body members and extends in the vehicle width direction. A left end part 10a of the steering hanger beam 10 is fixed to a front-passenger-side holder member 4 which is provided to the vehicle body member on the front passenger side. Further, a right end part 10b of the steering hanger beam 10 is fixed to a driver-side holder member 5 provided to the vehicle body member on the driver side.

The steering hanger beam 10 includes a first pipe member 11 disposed on the front passenger side and a second pipe member 12 disposed on the driver side and having a larger diameter than the first pipe member 11. The first pipe member 11 and the second pipe member 12 are integrally formed by a connecting means such as welding. A column holder 20 (described later) is fixed to the middle part of the second pipe member 12 on the driver side. A pair of knee bolsters 13,13 extend obliquely rear downward from the lower surface of the second pipe member 12 on the left and right sides of the column holder 20. The knee bolster 13 is a member for receiving a load from the knee of a passenger to suppress the frontward movement of the passenger when the front part of the vehicle is collided, for example. Although omitted in the accompanying drawings, the steering hanger beam 10 is provided with a bracket or the like to which a globe box or a center panel are attached in addition to the components described above.

As shown in Fig. 1, the column holder 20 is a member which supports a steering column 2. The column holder 20 is attached to the lower side of the steering hanger beam 10 at an intermediate part of the steering hanger beam 10 in the vehicle width direction (More particularly, a little left to the middle of the second pipe member 12). The column holder 20 extends in the front-rear direction along the steering column 2.

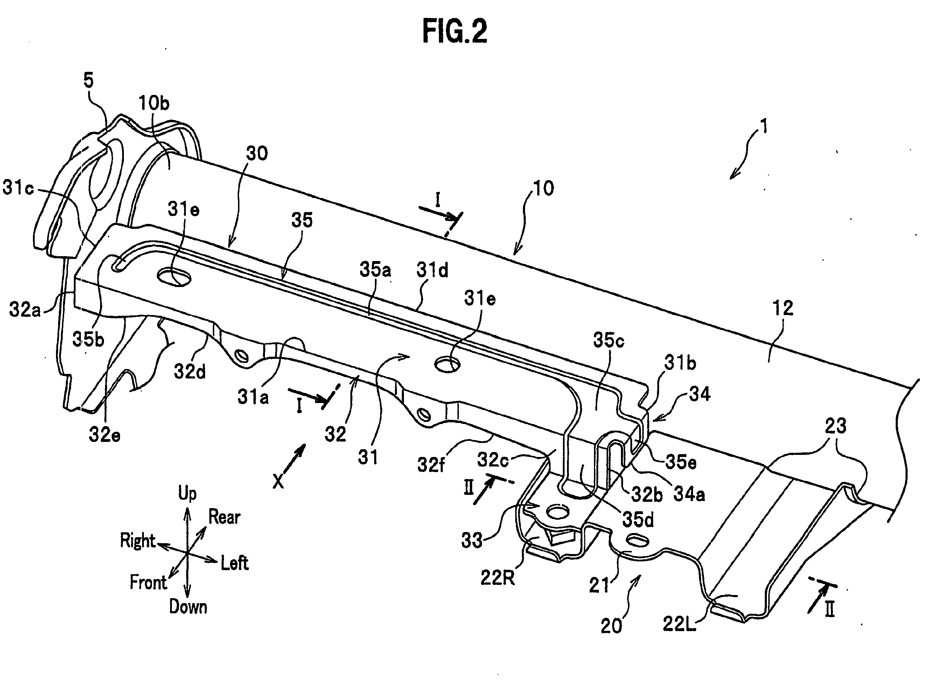

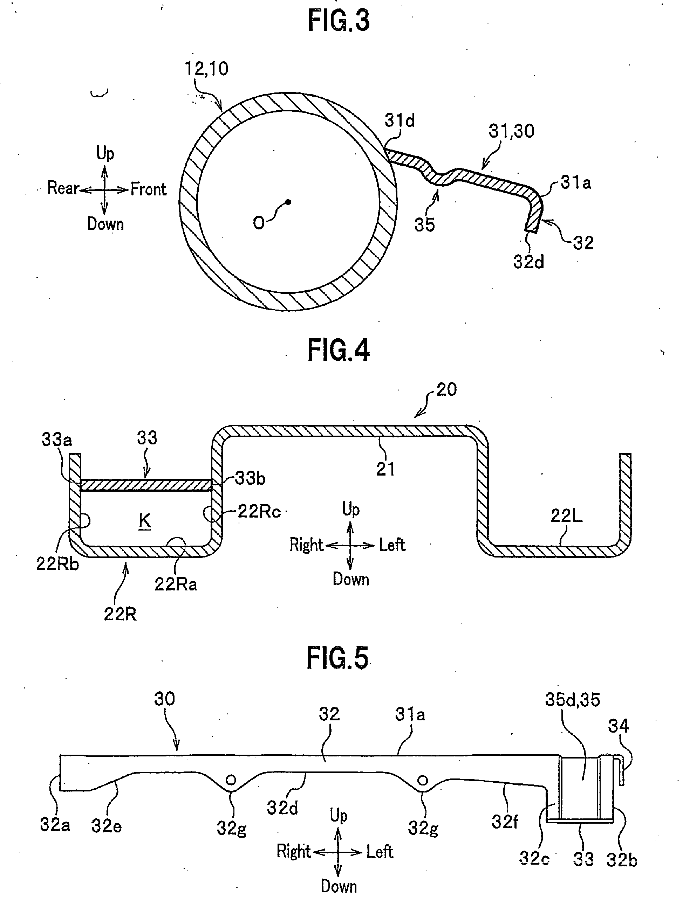

As shown in Figs. 2 and 4, the column holder 20 includes a groove-like column mounting part 21 which opens downward; and recessed cross section parts 22R, 22L which are provided on the left and right sides of the column mounting part 21 and open upward. The column mounting part 21 is attached to the steering column 2 such that the column mounting part 21 is fit into the steering column 2. Provided on the upper surface of the column holder 20 is a beam mounting part 23 formed in a circular concave shape which corresponds to the shape of the lower surface of the second pipe member 12. Although not shown, the left side recessed cross section part 22L of the column holder 20 is connected to a front part vehicle body member such as an instrument panel or dashboard upper via a supporting stay (not shown).

As shown in Fig. 1, the stiffener 30 is a member which reinforces the steering hanger beam 10. The stiffener 30 is formed of a press plate which is formed by press forming a metallic plate such as a steel plate or an aluminum plate. The stiffener 30 is attached to a part of a front side outer circumferential surface of the second pipe member 12 from the driver-side holder member 5 to the column holder 20.

As shown in Figs. 2 and 3, the stiffener 30 mainly includes a plate-like stiffener main body 31 which extends obliquely front downward from the front outer circumferential surface of the second pipe member 12; a first flange portion 32 which extends downward from the front end portion 31a of the stiffener main body 31; a leg portion 33 provided to the first flange portion 32 on the side of the column holder 20; a second flange portion 34 extending downward from an end portion 31b of the stiffener main body 31 on the side of the column holder 20; and a bead 35 formed over a substantially entire part of the stiffener 30.

The stiffener main body 31 is a plate like portion formed long in the right-left direction and having a rectangular shape in a plain view. The stiffener main body 31 includes a plurality of through-holes 31e which is mounting seats of electrical members (not shown). The stiffener main body 31 extend away from the cross-sectional center O of the second pipe member 12 (frontward in the embodiment)from the front outer circumferential surface of the second pipe member 12 in a cross sectional view as shown in Fig. 3.

As shown in Fig. 2, the right end portion 31c of the stiffener main body 31(may also be referred to as a "vehicle-body-member-side connecting end portion 31c", hereinafter) is welded to the driver-side holder member 5, for example, by mig welding. The end portion 31b of the stiffener main body 31(may also be referred to as a "column-holder-side connecting end portion 31b") on the side of the column holder 20 is connected to the upper surface of the column holder 20 via the second flange portion 34. A lower end portion 34a of the second flange portion 34 is welded to the upper surface of the column holder 20, for example, by mig welding. An end portion 31d (may also be referred to as a "beam connecting end portion 31d", hereinafter) of the stiffener main body 31 on the side of the steering hanger beam 10 extends along the second pipe member 12 in the right-left direction and is welded to the outer circumferential surface of the second pipe member 12, for example, by mig welding.

As shown in Figs. 2 and 5, the first flange portion 32 is a wall like portion which extends downward from the front end portion 31a of the stiffener main body 31. In the embodiment, the first flange portion 32 is formed to be bent such that the first flange portion 32 is substantially perpendicular to the stiffener main body 31. A right end portion 32a of the first flange portion 32 is welded to the driver-side holder member 5, for example, by mig welding. The part around the left end portion 32b of the first flange portion 32 is positioned above the right side recessed cross section part22R of the column holder 20 and forms a wall portion 32c which connects the stiffener main body 31 and the leg portion 33.

A portion 32e (may also be referred to as "vehicle-body-member side inclination portion 32e") on the side of the driver-side holder member 5 in the lower end portion 32d of the first flange portion 32 which is an end opposite to the stiffener main body 31 is inclined away from the stiffener main body 31 as the portion 32e comes closer to the driver-side holder member 5. On the other hand, a part 32f (may also be referred to as "column-holder side inclination part 32f") on the side of the column holder 20 in the lower end portion 32d of the first flange portion 32 is inclined away from the stiffener main body 31 as the part 32f comes closer to the column holder 20 (more particularly, the wall portion 32c). Thus, by forming the vehicle-body-member side inclination portion 32e and the column-holder side inclination part 32f, the lower end portion 32d of the first flange portion 32 are formed in an upside down U-like curved shape in which the left and right ends of the lower end portion 32d are positioned lower than the center part thereof. The lower end portion 32d of the first flange portion 32 is provided with two protrusions 32g, 32g (see Fig. 5) each including a through-hole and arranged with some space therebetween.

As shown in Figs. 2 and 4, the leg portion 33 extends frontward from the lower end portion of the wall portion 32c of the first flange portion 32. In short, the leg portion 33 is continued to the column-holder side inclination part 32f via the wall portion 32c. The leg portion 33 is fit into the right side recessed cross section part22R of the column holder 20. As shown in Fig. 4, the leg portion 33 is arranged above a bottom portion 22Ra of the recessed cross section part 22R with some space between the leg portion 33 and the bottom portion 22Ra. Left and right side portions 33a, 33b of the leg portion 33 are respectively welded to left and right inner walls 22Rb, 22Rc of the recessed cross section part 22R, for example, by mig welding. Accordingly, a closed cross sectional surface K is formed by the leg portion 33 and the recessed cross section part22R.

The second flange portion 34 is a wall-like portion extending downward from the end portion 31b of the stiffener main body 31 on the side of the column holder 20. In the embodiment, the second flange portion 34 is formed to be bent such that the second flange portion 34 is perpendicular to both of the stiffener main body 31 and the first flange portion 32. The lower end portion 34a of the second flange portion 34 is welded to the upper surface of the column holder 20, for example, by mig welding. The front end portion of the second flange portion 34 is spaced from the first flange portion 32 and a rear end portion of the second flange portion 34 is spaced from the outer circumferential surface of the second pipe member 12.

The bead 35 is a reinforcing structure for increasing the rigidity of the stiffener 30. The bead 35 is formed by press forming a press plate in such a shape that the upper surface of the bead 35 is recessed and the back surface of the bead 35 is protruded, as shown in Fig. 3. As shown in Fig. 2, the bead 35 includes a first bead portion 35a which extend in the right-left direction along the edge of the upper surface of the stiffener main body 31 on the side of the steering hanger beam 10; a second bead portion 35b formed to be curved frontward continuously from the first bead portion 35a in the vicinity of the end portion 31c of the stiffener main body 31; a third bead portion 35c which is formed to be bent frontward from the first bead portion 35a in the vicinity of the end portion 31b of the stiffener main body 31 on the side of the column holder 20 and is formed to be wider than the first bead portion 35a; a fourth bead portion 35d which is continued to the upper surface of the leg portion 33 from the third bead portion 35c through the wall portion 32c; and a fifth bead portion 35e formed over the surface of the second flange portion 34 from the third bead portion 35c.

The steering hanger beam structure 1 according to the embodiment is formed as described above and effects of the steering hanger beam structure 1 is described below with reference to Figs. 1 to 5.

In accordance with the steering hanger beam structure 1, as the stiffener 30 is formed of a press plate and is arranged between the driver-side holder member 5 and the column holder 20, it is possible to suppress the weight increase of the vehicle body compared with a conventional reinforced structure in which a steering hanger beam is formed in a double-pipe structure in the entire length of the steering hanger beam.

Further, as the stiffener 30 is welded to the driver-side holder member 5, the column holder 20 and the steering hanger beam 10 and the stiffener main body 31 extend in a direction away from the cross-sectional center O of the steering hanger beam 10 (frontward in the embodiment), it is possible to secure the rigidity of the steering hanger beam 10. Especially, it is possible to obtain the strength and rigidity to a load which acts to bend the steering hanger beam 10 or change the cross sectional shape of the steering hanger beam 10 in a direction substantially parallel to the stiffener main body 31 (i.e. the right-left direction).

Furthermore, as the first flange portion 32 extend downward from the front end portion 31a of the stiffener main body 31, it is possible to obtain the strength and rigidity to a load which acts to bend the steering hanger beam 10 or change the cross sectional shape of the steering hanger beam 10 in the up-down direction.

Moreover, as the first flange portion 32 extend in the up-down direction and is formed in a curved shape in which the middle part of the lower end portion 32d is recessed upward by the column-holder side inclination part 32f and the vehicle-body-member side inclination portion 32e, it is possible to enhance the strength and rigidity to the downward bending deformation of the steering hanger beam 10 by the arch effect of the first flange portion 32. Therefore, it is possible to suppress the deformation of the steering hanger beam 10 by the weight of the steering column 2 and the steering wheel 3.

Further, as the closed cross sectional surface K is formed by the leg portion 33 of the stiffener 30 and the recessed cross section part 22R of the column holder 20, it is possible to further improve the strength and the rigidity to the bending or deformation of the steering hanger beam 10.

As the column-holder side inclination part 32f is formed between the first flange portion 32 and the leg portion 33, it is possible to suppress the rapid shape change (bending) of the part between the first flange portion 32 and the leg portion 33 and to alleviate the concentration of the stress to the leg portion 33.

Further, as the faces of the stiffener 30 in three directions are formed to be boxed shape by the stiffener main body 31, the first flange portion 32 and the second flange portion 34, it is possible to further improve the strength and rigidity of the stiffener 30.

As the stiffener 30 includes the bead 35 extending in the vehicle width direction and the bead 35 is formed over the stiffener main body 31 and the leg portion 33 and over the stiffener main body 31 and the second flange portion 34, it is possible to further enhance the strength and the rigidity to the deformation of the stiffener 30 in the direction outside of the faces of the stiffener.

In accordance with the present invention, a steering hanger beam structure can be realized which can suppress the weight increase of the steering hanger beam structure and can more easily improve the rigidity of the steering hanger beam structure than a conventional steering hanger beam structure.

The embodiment of the present invention has been described in detail with reference to the drawings as above, however, the present invention is not limited to the embodiment and may be modified without deviating from the scope of the invention.

For example, the stiffener 30 is attached to the front side of the steering hanger beam 10 in the embodiment, however, the present invention is not limited to this and the stiffener 30 may be attached to the front-rear or up-down direction depending on the direction in which the strength and the rigidity are to be improved.

Further, the front-passenger-side holder member 4 and the driver-side holder member 5 are illustrated in the embodiment as left and right vehicle body members to which the steering hanger beam 10 is attached, however, the present invention is not limited to this. The steering hanger beam 10 may be directly attached to a vehicle body member such as a front pillar or an inner panel appropriately.

A steering hanger beam structure 1 includes a steering hanger beam 10 extending in a vehicle width direction, a column holder 20 which supports a steering column 2, and a stiffener 30 formed of a press plate. The stiffener 30 includes a stiffener main body extending front downward from the front outer circumferential surface of the second pipe member 12, a vehicle-body-member-side connecting end portion 31c which is connected to the driver-side holder member 5, a column-holder-side connecting end portion 31b which is connected to the column holder 20; and a beam connecting end portion 31d which is connected to the outer circumferential surface of the steering hanger beam 10.

## Claims

1. A steering hanger beam structure (1) comprising:
a steering hanger beam (10) extending in a vehicle width direction and
connected to right and left vehicle body members;
a column holder (20) arranged on an intermediate part of the steering hanger beam in the vehicle width direction and supporting a steering column; and
a stiffener (30) which is formed of a press plate, wherein
the stiffener (30) includes: a stiffener main body (31) extending in a direction away from a cross sectional center of the steering hanger beam (10);
a vehicle-body-member-side connecting end portion (31c) which is one end of the stiffener main body (31) in the vehicle width direction and is connected to the vehicle body member;
a column-holder-side connecting end portion (31 b) which is the other end of the stiffener main body (31) in the vehicle width direction and is connected to the column holder (20); and
a beam connecting end portion (31 d) which is an end portion of the stiffener main body (31) on a side of the steering hanger beam (10) and is welded to an outer circumferential surface of the steering hanger beam (10),
**characterized in that**
the stiffener (30) further comprises a first flange portion (32) which extends from an end (31 a) of the stiffener (31) opposite to the beam connecting end portion (31d) in a direction in which the first flange portion (32) intersects with the stiffener main body (31).

2. The steering hanger beam structure (1) according to Claim 1, wherein the first flange portion (32) is provided over an entire length of the stiffener (31) in a vehicle width direction and includes a column-holder-side inclined portion (32f) at an end of the first flange portion (32) opposite to the stiffener main body (31), the column-holder-side inclined portion (32f) being inclined away from the stiffener main body (31) as the column-holder-side inclined portion (32f) comes closer to the column holder (20).

3. The steering hanger beam structure (1) according to Claim 1, wherein the first flange portion (32) is provided over an entire length of the stiffener (30) in the vehicle width direction and includes a vehicle-body-member-side inclined portion (32e) at an end of the first flange portion (32) opposite to the stiffener main body (31), the vehicle-body-member-side inclined portion (32e) being inclined away from the stiffener main body (31) as the vehicle-body-member-side inclined portion (32e) comes closer to the column holder (20).

4. The steering hanger beam structure (1) according to Claim 2, wherein the first flange portion (32) is provided over an entire length of the stiffener (30) in the vehicle width direction and includes a vehicle-body-member-side inclined portion (32e) at an end of the first flange portion (32) opposite to the stiffener main body (31), the vehicle-body-member-side inclined portion (32e) being inclined away from the stiffener main body (31) as the vehicle-body-member-side inclined portion (32e) comes closer to the column holder (20).

5. The steering hanger beam structure (1) according to Claim 1, wherein the stiffener (30) is welded to the outer circumferential surface of the steering hanger beam (10) such that the stiffener main body (31) extend in a vehicle front-rear direction; and
the stiffener (30) includes the first flange portion (32) which is provided over an entire length of the stiffener (30) in the vehicle width direction and extends downward from an end of the stiffener opposite to the beam connecting end portion (31d), and wherein
the first flange portion (32) includes at its lower end a column-holder-side inclined portion (32f) which is inclined downward as the column-holder-side inclined portion (32f) comes closer to the column holder (20) and a vehicle-body-member-side inclined portion (32e) which is inclined downward as the vehicle-body-member-side inclined portion (32e) comes closer to the vehicle body member.

6. The steering hanger beam structure (1) according to Claim 1, wherein the column holder (20) includes a recessed cross section part (22R) which extends in a vehicle front-rear direction and opens upward, and the stiffener (30) further includes a leg portion (33) which covers an opened portion of the recessed cross section part (22R) to form a closed cross section together with the recessed cross section part (22R).

7. The steering hanger beam structure (1) according to Claim 1, wherein the column holder (20) includes a recessed cross section part (22R) which extends in a vehicle front-rear direction and opens upward, and the stiffener (30) further includes a leg portion (33) which covers an opened portion of the recessed cross section part (22R) to form a closed cross section together with the recessed cross section part (22R).

8. The steering hanger beam structure (1) according to Claim 2, wherein the column holder (20) includes a recessed cross section part (22R) which extends in a vehicle front-rear direction and opens upward, and the stiffener (30) further includes a leg portion (33) which covers an opened portion of the recessed cross section part (22R) to form a closed cross section together with the recessed cross section part (22R).

9. The steering hanger beam structure (1) according to Claim 3, wherein the column holder (20) includes a recessed cross section part (22R) which extends in a vehicle front-rear direction and opens upward, and the stiffener (30) further includes a leg portion (33) which covers an opened portion of the recessed cross section part (22R) to form a closed cross section together with the recessed cross section part (22R).

10. The steering hanger beam structure (1) according to Claim 4, wherein the column holder (20) includes a recessed cross section part (22R) which extends in a vehicle front-rear direction and opens upward, and the stiffener (30) further includes a leg portion (33) which covers an opened portion of the recessed cross section part (22R) to form a closed cross section together with the recessed cross section part (22R).

11. The steering hanger beam structure (1) according to Claim 5, wherein the column holder (20) includes a recessed cross section part (22R) which extends in a vehicle front-rear direction and opens upward, and the stiffener (30) further includes a leg portion (33) which covers an opened portion of the recessed cross section part (22R) to form a closed cross section together with the recessed cross section part (22R).

12. The steering hanger beam structure (1) according to Claim 2, wherein the column holder (20) includes a recessed cross section part (22R) which extends in a vehicle front-rear direction and opens upward, and the stiffener (30) further includes a leg portion (33) which covers an opened portion of the recessed cross section part (22R) to form a closed cross section together with the recessed cross section part (22R), and wherein the leg portion (33) is formed to be continued to the column-holder-side inclined portion (32f).

13. The steering hanger beam structure (1) according to Claim 4, wherein the column holder (20) includes a recessed cross section part (22R) which extends in a vehicle front-rear direction and opens upward, and the stiffener (30) further includes a leg portion (33) which covers an opened portion of the recessed cross section part (22R) to form a closed cross section together with the recessed cross section part (22R), and wherein the leg portion (33) is formed to be continued to the column-holder-side inclined portion (32f).

14. The steering hanger beam structure (1) according to any one of Claims 1 to 13, wherein the stiffener (30) includes a second flange portion (34) which extends from the column-holder-side connecting end portion (31b) such that the second flange portion (34) intersects with the stiffener main body (31), and
the column-holder-side connecting end portion (31 b) is connected to the column holder (20) via the second flange portion (34).

15. The steering hanger beam structure (1) according to Claim 14, wherein the stiffener (30) includes a bead (35) extending in the vehicle width direction, the bead (35) being formed over the stiffener main body (31) and the second flange portion (34).

## Patentansprüche

1. Lenkungsaufhängungsträgerstruktur (1) umfassend:
einen Lenkungsaufhängungsträger (10), welcher sich in eine Fahrzeugbreitenrichtung erstreckt und mit rechten und linken Fahrzeugkarosserieelementen verbunden ist;
einen Säulenhalter (20), welcher an einem Zwischenteil des Lenkungsaufhängungsträgers in der Fahrzeugbreitenrichtung angeordnet ist und eine Lenksäule trägt; und
eine Versteifung (30), die aus einer Pressplatte gebildet ist, wobei die Versteifung (30) umfasst: einen Versteifungshauptkörper (31),
welcher sich in eine Richtung weg von einem Querschnittmittelpunkt des Lenkungsaufhängungsträgers (10) erstreckt;
einen fahrzeugkarosserieelementseitigen Verbindungsendabschnitt (31 c), welcher ein Ende des Versteifungshauptkörpers (31) in der Fahrzeugbreitenrichtung ist und mit dem Fahrzeugkarosserieelement verbunden ist;
einen säulenhalterseitigen Verbindungsendabschnitt (31 b), welcher das andere Ende des Versteifungshauptkörpers (31) in der Fahrzeugbreitenrichtung ist und mit dem Säulenhalter (20) verbunden ist; und
einen Trägerverbindungsendabschnitt (31 d), welcher ein Endabschnitt des Versteifungshauptkörpers (31) ist, an einer Seite des Lenkungsaufhängungsträgers (10), und welcher an eine Außenumfangsfläche des Lenkungsaufhängungsträgers (10)
geschweißt ist,
**dadurch gekennzeichnet, dass** die Versteifung (30) ferner einen ersten
Flanschabschnitt (32) umfasst, welcher sich von einem Ende (31 a) der Versteifung (31), die dem Trägerverbindungsendabschnitt (31d) gegenüberliegt, in eine Richtung erstreckt, in welcher der erste Flanschabschnitt (32) den Versteifungshauptkörper (31) kreuzt.

2. Lenkungsaufhängungsträgerstruktur (1) nach Anspruch 1, wobei der erste Flanschabschnitt (32) über eine Gesamtlänge der Versteifung (31) in einer Fahrzeugbreitenrichtung bereitgestellt ist und einen säulenhalterseitigen geneigten Abschnitt (32f) an einem Ende des ersten Flanschabschnitts (32) umfasst, welcher dem Versteifungshauptkörper (31) gegenüberliegt, wobei der säulenhalterseitige geneigte Abschnitt (32f) von dem Versteifungshauptkörper (31) weg geneigt ist, wenn der säulenhalterseitige geneigte Abschnitt (32f) näher an den Säulenhalter (20) kommt.

3. Lenkungsaufhängungsträgerstruktur (1) nach Anspruch 1, wobei der erste Flanschabschnitt (32) über eine gesamte Länge der Versteifung (30) in der Fahrzeugbreitenrichtung bereitgestellt ist, und einen fahrzeugkarosserieelementseitigen geneigten Abschnitt (32e) an einem Ende des ersten Flanschabschnitts (32) umfasst, welcher dem Versteifungshauptkörper (31) gegenüberliegt, wobei der fahrzeugkarosserieelementseitige geneigte Abschnitt (32e) weg von dem Versteifungshauptkörper (31) geneigt ist, wenn der fahrzeugkarosserieelementseitige geneigte Abschnitt (32e) näher an den Säulenhalter (20) kommt.

4. Lenkungsaufhängungsträgerstruktur (1) nach Anspruch 2, wobei der erste Flanschabschnitt (32) über eine gesamte Länge der Versteifung (30) in der Fahrzeugbreitenrichtung bereitgestellt ist und einen fahrzeugkarosserieelementseitigen geneigten Abschnitt (32e) an einem Ende des ersten Flanschabschnitts (32) umfasst, welches dem Versteifungshauptkörper (31) gegenüberliegt, wobei der fahrzeugkarosserieelementseitige geneigte Abschnitt (32e) von dem Versteifungshauptkörper (31) weg geneigt ist, wenn der fahrzeugkarosserieelementseitige geneigte Bereich (32e) näher an den Säulenhalter (20) kommt.

5. Lenkungsaufhängungsträgerstruktur (1) nach Anspruch 1, wobei die Versteifung (30) an den äußeren Umfangsfläche des Lenkungsaufhängungsträgers (10) geschweißt ist, so dass der Versteifungshauptkörper (31) sich in eine Längsrichtung des Fahrzeugs erstreckt; und
die Versteifung (30) umfasst den ersten Flanschabschnitt (32), welcher über die gesamte Länge der Versteifung (30) in der Fahrzeugbreitenrichtung bereitgestellt ist und welcher sich abwärts von einem Ende der Versteifung erstreckt, das dem Trägerverbindungsendabschnitt (31 d) gegenüberliegt, und wobei der erste Flanschabschnitt (32) an seinem unteren Ende einen säulenhalterseitigen geneigten Abschnitt (32f) umfasst, welcher abwärts geneigt ist, wenn der säulenhalterseitige geneigte Abschnitt (32f) näher an den Säulenhalter (20) kommt, und einen fahrzeugkarosserieelementseitigen geneigten Abschnitt (32e) umfasst, welcher nach unten geneigt ist, wenn der fahrzeugkarosserieelementseitige geneigte Abschnitt (32e) näher an das Fahrzeugkarosserieelement kommt.

6. Lenkungsaufhängungsträgerstruktur (1) nach Anspruch 1, wobei der Säulenhalter (20) einen ausgenommenen Querschnittsteil (22R) umfasst, welcher sich in eine Fahrzeuglängsrichtung erstreckt und sich aufwärts öffnet, und wobei die Versteifung (30) ferner einen Beinabschnitt (33) umfasst, welcher einen offenen Abschnitt des ausgenommenen Querschnittsteils (22R) abdeckt, um einen geschlossenen Querschnitt zusammen mit dem ausgenommenen Querschnittsteil (22R) zu bilden.

7. Lenkungsaufhängungsträgerstruktur (1) nach Anspruch 1, wobei der Säulenhalter (20) einen ausgenommenen Querschnittsteil (22R) umfasst, welcher sich in eine Längsrichtung des Fahrzeugs erstreckt und sich aufwärts öffnet, und wobei die Versteifung (30) ferner einen Beinabschnitt (33) umfasst, welcher einen offenen Abschnitt des ausgenommenen Querschnittsteils (22R) abdeckt, um einen geschlossenen Querschnitt zusammen mit dem ausgenommenen Querschnittsteil (22R) zu bilden.

8. Lenkungsaufhängungsträgerstruktur (1) nach Anspruch 2, wobei der Säulenhalter (20) einen ausgenommenen Querschnittsteil (22R) umfasst, welcher sich in eine Längsrichtung des Fahrzeugs erstreckt und sich aufwärts öffnet, und wobei die Versteifung (30) ferner einen Beinabschnitt (33) umfasst, welcher einen offenen Abschnitt des ausgenommenen Querschnittsteils (22R) abdeckt, um einen geschlossenen Querschnitt zusammen mit dem ausgenommenen Querschnittsteil (22R) zu bilden.

9. Lenkungsaufhängungsträgerstruktur (1) nach Anspruch 3, wobei der Säulenhalter (20) einen ausgenommenen Querschnittsteil (22R) umfasst, welcher sich in eine Längsrichtung des Fahrzeugs erstreckt und sich aufwärts öffnet, und wobei die Versteifung (30) ferner einen Beinabschnitt (33) umfasst, welcher einen offenen Abschnitt des ausgenommenen Querschnittsteils (22R) abdeckt, um einen geschlossenen Querschnitt zusammen mit dem ausgenommenen Querschnittsteil (22R) zu bilden.

10. Lenkungsaufhängungsträgerstruktur (1) nach Anspruch 4, wobei der Säulenhalter (20) einen ausgenommenen Querschnittsteil (22R) umfasst, welcher sich in eine Längsrichtung des Fahrzeugs erstreckt und sich aufwärts öffnet, und wobei die Versteifung (30) ferner einen Beinabschnitt (33) umfasst, welcher einen offenen Abschnitt des ausgenommenen Querschnittsteils (22R) abdeckt, um einen geschlossenen Querschnitt zusammen mit dem ausgenommenen Querschnittsteil (22R) zu bilden.

11. Lenkungsaufhängungsträgerstruktur (1) nach Anspruch 5, wobei der Säulenhalter (20) einen ausgenommenen Querschnittsteil (22R) umfasst, welcher sich in eine Längsrichtung des Fahrzeugs erstreckt und sich aufwärts öffnet, und wobei die Versteifung (30) ferner einen Beinabschnitt (33) umfasst, welcher einen offenen Abschnitt des ausgenommenen Querschnittsteils (22R) abdeckt, um einen geschlossenen Querschnitt zusammen mit dem ausgenommenen Querschnittsteil (22R) zu bilden.

12. Lenkungsaufhängungsträgerstruktur (1) nach Anspruch 2, wobei der Säulenhalter (20) einen ausgenommenen Querschnittsteil (22R) umfasst, welcher sich in eine Längsrichtung des Fahrzeugs erstreckt und sich aufwärts öffnet, und wobei die Versteifung (30) ferner einen Beinabschnitt (33) umfasst, welcher einen offenen Abschnitt des ausgenommenen Querschnittsteils (22R) abdeckt, um einen geschlossenen Querschnitt zusammen mit dem ausgenommenen Querschnittsteil (22R) zu bilden, und wobei der Beinabschnitt (33) gebildet ist, um sich zu dem säulenhalterseitigen geneigten Abschnitt (32f) fortzusetzen.

13. Lenkungsaufhängungsträgerstruktur (1) nach Anspruch 4, wobei der Säulenhalter (20) einen ausgenommenen Querschnittsteil (22R) umfasst, welcher sich in eine Längsrichtung des Fahrzeugs erstreckt und sich aufwärts öffnet, und wobei die Versteifung (30) ferner einen Beinabschnitt (33) umfasst, welcher einen offenen Abschnitt des ausgenommenen Querschnittsteils (22R) abdeckt, um einen geschlossenen Querschnitt zusammen mit dem ausgenommenen Querschnittsteil (22R) zu bilden, und wobei der Beinabschnitt (33) gebildet ist, um sich zu dem säulenhalterseitigen geneigten Abschnitt (32f) fortzusetzen.

14. Lenkungsaufhängungsträgerstruktur (1) nach einem der Ansprüche 1 bis 13, wobei die Versteifung (30) einen zweiten Flanschabschnitt (34) umfasst, welcher sich von dem säulenhalterseitigen Verbindungsendabschnitt (31 b) erstreckt, so dass der zweite Flanschabschnitt (34) den Versteifungshauptkörper (31) kreuzt, und wobei der säulenhalterseitigen Verbindungsendabschnitt (31 b) mit dem Säulenhalter (20) über den zweiten Flaschabschnitt (34) verbunden ist.

15. Lenkungsaufhängungsträgerstruktur (1) nach Anspruch 14, wobei die Versteifung (30) eine Wulst (35) umfasst, welche sich in die Fahrzeugbreitenrichtung erstreckt, wobei die Wulst (35) über den Versteifungshauptkörper (31) und den zweiten Flanschabschnitt (34) gebildet ist.

## Revendications

1. Structure de poutre de suspension de direction (1) comprenant:
- une poutre de suspension de direction (10) s'étendant dans une direction de largeur du véhicule et connectée à des éléments droit et gauche de carrosserie du véhicule;
- un support de colonne (20) agencé sur une partie intermédiaire de la poutre de suspension de direction dans la direction de largeur du véhicule et supportant une colonne de direction; et un raidisseur (30) qui est formé d'une plaque de presse, dans laquelle
- le raidisseur (30) comprend: un corps principal de raidisseur (31) s'étendant dans une direction s'éloignant d'un centre de section transversale de la poutre de suspension de direction (10);
- une partie d'extrémité (31c) de connexion du côté d'un élément de carrosserie du véhicule, qui est une extrémité du corps principal de raidisseur (31) dans la direction de largeur du véhicule et qui est connectée à l'élément de carrosserie du véhicule;
- une partie d'extrémité (31b) de connexion du côté du support de colonne, qui est l'autre extrémité du corps principal de raidisseur (31) dans la direction de largeur du véhicule et qui est connectée au support de colonne (20); et
- une partie d'extrémité (31d) de connexion de poutre, qui est une partie d'extrémité du corps principal de raidisseur (31) sur un côté de la poutre de suspension de direction (10) et qui est soudée à une surface circonférentielle extérieure de la poutre de suspension de direction (10),
**caractérisée en ce que**
- le raidisseur (30) comprend en outre une première partie de bride (32), qui s'étend à partir d'une extrémité (31a) du raidisseur (31) opposée à la partie d'extrémité (31d) de connexion de poutre dans une direction dans laquelle la première partie de bride (32) coupe le corps principal de raidisseur (31).

2. Structure de poutre de suspension de direction (1) selon la revendication 1, dans laquelle la première partie de bride (32) est prévue sur une longueur entière du raidisseur (31) dans une direction de largeur du véhicule et comprend une partie inclinée (32f) du côté du support de colonne à une extrémité de la première partie de bride (32) opposée au corps principal de raidisseur (31), la partie inclinée (32f) du côté du support de colonne étant inclinée à l'écart du corps principal de raidisseur (31) lorsque la partie inclinée (32f) du côté du support de colonne s'approche du support de colonne (20).

3. Structure de poutre de suspension de direction (1) selon la revendication 1, dans laquelle la première partie de bride (32) est prévue sur une longueur entière du raidisseur (30) dans la direction de largeur du véhicule et comprend une partie inclinée (32e) du côté de l'élément de carrosserie du véhicule à une extrémité de la première partie de bride (32) opposée au corps principal de raidisseur (31), la partie inclinée (32e) du côté de l'élément de carrosserie du véhicule étant inclinée à l'écart du corps principal de raidisseur (31) lorsque la partie inclinée (32e) du côté de l'élément de carrosserie du véhicule s'approche du support de colonne (20).

4. Structure de poutre de suspension de direction (1) selon la revendication 2, dans laquelle la première partie de bride (32) est prévue sur une longueur entière du raidisseur (30) dans la direction de largeur du véhicule et comprend une partie inclinée (32e) du côté de l'élément de carrosserie du véhicule à une extrémité de la première partie de bride (32) opposée au corps principal de raidisseur (31), la partie d'extrémité (32e) du côté de l'élément de carrosserie du véhicule étant inclinée à l'écart du corps principal de raidisseur (31) lorsque la partie inclinée (32e) du côté de l'élément de carrosserie du véhicule s'approche du support de colonne (20).

5. Structure de poutre de suspension de direction (1) selon la revendication 1, dans laquelle le raidisseur (30) est soudé à la surface circonférentielle extérieure de la poutre de suspension de direction (10) de telle manière que le corps principal de raidisseur (31) s'étende dans une direction avant-arrière du véhicule; et
le raidisseur (30) comprend la première partie de bride (32) qui est prévue sur une longueur entière du raidisseur (30) dans la direction de largeur du véhicule et s'étend vers le bas à partir d'une extrémité du raidisseur opposée à la partie d'extrémité (31d) de connexion de poutre, et dans laquelle la première partie de bride (32) comprend à son extrémité inférieure un partie inclinée (32f) du côté du support de colonne, qui est inclinée vers le bas lorsque la partie inclinée (32f) du côté du support de colonne s'approche du support de colonne (20) et une partie inclinée (32e) du côté de l'élément de carrosserie du véhicule qui est inclinée vers le bas lorsque la partie inclinée (32e) du côté de l'élément de carrosserie du véhicule s'approche de l'élément de carrosserie du véhicule.

6. Structure de poutre de suspension de direction (1) selon la revendication 1, dans laquelle le support de colonne (20) comprend une partie de section transversale refoulée (22R) qui s'étend dans une direction avant-arrière du véhicule et s'ouvre vers le haut, et le raidisseur (30) comprend en outre une partie de jambe (33) qui couvre une partie ouverte de la partie de section transversale refoulée (22R) afin de former une section transversale fermée en combinaison avec la partie de section transversale refoulée (22R).

7. Structure de poutre de suspension de direction (1) selon la revendication 1, dans laquelle le support de colonne (20) comprend une partie de section transversale refoulée (22R) qui s'étend dans une direction avant-arrière du véhicule et s'ouvre vers le haut, et le raidisseur (30) comprend en outre une partie de jambe (33) qui couvre une partie ouverte de la partie de section transversale refoulée (22R) afin de former une section transversale fermée en combinaison avec la partie de section transversale refoulée (22R).

8. Structure de poutre de suspension de direction (1) selon la revendication 2, dans laquelle le support de colonne (20) comprend une partie de section transversale refoulée (22R) qui s'étend dans une direction avant-arrière du véhicule et s'ouvre vers le haut, et le raidisseur (30) comprend en outre une partie de jambe (33) qui couvre une partie ouverte de la partie de section transversale refoulée (22R) afin de former une section transversale fermée en combinaison avec la partie de section transversale refoulée (22R).

9. Structure de poutre de suspension de direction (1) selon la revendication 3, dans laquelle le support de colonne (20) comprend une partie de section transversale refoulée (22R) qui s'étend dans une direction avant-arrière du véhicule et s'ouvre vers le haut, et le raidisseur (30) comprend en outre une partie de jambe (33) qui couvre une partie ouverte de la partie de section transversale refoulée (22R) afin de former une section transversale fermée en combinaison avec la partie de section transversale refoulée (22R).

10. Structure de poutre de suspension de direction (1) selon la revendication 4, dans laquelle le support de colonne (20) comprend une partie de section transversale refoulée (22R) qui s'étend dans une direction avant-arrière du véhicule et s'ouvre vers le haut, et le raidisseur (30) comprend en outre une partie de jambe (33) qui couvre une partie ouverte de la partie de section transversale refoulée (22R) afin de former une section transversale fermée en combinaison avec la partie de section transversale refoulée (22R).

11. Structure de poutre de suspension de direction (1) selon la revendication 5, dans laquelle le support de colonne (20) comprend une partie de section transversale refoulée (22R) qui s'étend dans une direction avant-arrière du véhicule et s'ouvre vers le haut, et le raidisseur (30) comprend en outre une partie de jambe (33) qui couvre une partie ouverte de la partie de section transversale refoulée (22R) afin de former une section transversale fermée en combinaison avec la partie de section transversale refoulée (22R).

12. Structure de poutre de suspension de direction (1) selon la revendication 2, dans laquelle le support de colonne (20) comprend une partie de section transversale refoulée (22R) qui s'étend dans une direction avant-arrière du véhicule et s'ouvre vers le haut, et le raidisseur (30) comprend en outre une partie de jambe (33) qui couvre une partie ouverte de la partie de section transversale refoulée (22R) afin de former une section transversale fermée en combinaison avec la partie de section transversale refoulée (22R), et dans laquelle la partie de jambe (33) est formée de façon à être continuée jusqu'à la partie inclinée (32f) du côté du support de colonne.

13. Structure de poutre de suspension de direction (1) selon la revendication 4, dans laquelle le support de colonne (20) comprend une partie de section transversale refoulée (22R) qui s'étend dans une direction avant-arrière du véhicule et s'ouvre vers le haut, et le raidisseur (30) comprend en outre une partie de jambe (33) qui couvre une partie ouverte de la partie de section transversale refoulée (22R) afin de former une section transversale fermée en combinaison avec la partie de section transversale refoulée (22R), et dans laquelle la partie de jambe (33) est formée de façon à être continuée jusqu'à la partie inclinée (32f) du côté du support de colonne.

14. Structure de poutre de suspension de direction (1) selon l'une quelconque des revendications 1 à 13, dans laquelle le raidisseur (30) comprend une deuxième partie de bride (34) qui s'étend à partir de la partie d'extrémité (31b) du côté du support de colonne de telle manière que la deuxième partie de bride (34) coupe le corps principal de raidisseur (31), et la partie d'extrémité (31b) de connexion du support de colonne est connectée au support de colonne (20) par l'intermédiaire de la deuxième partie de bride (34).

15. Structure de poutre de suspension de direction (1) selon la revendication 14, dans laquelle le raidisseur (30) comprend une moulure (35) s'étendant dans la direction de largeur du véhicule, la moulure (35) étant formée sur le corps principal de raidisseur (31) et la deuxième partie de bride (34).
